# EUROPÄISCHE PATENTANMELDUNG

(11) **EP 0 872 967 A2**
(43) Veröffentlichungstag der Anmeldung: **21.10.1998**
(21) Anmeldenummer: 98440057.2
(22) Anmeldetag: 23.03.1998
(51) Int. Cl.: H04B 7/24

(54) **Verfahren zum Aufbau einer Funkkette innerhalb eines Funknetzes**

(30) Priorität: 18.04.1997 DE 19716433
(71) Anmelder: Alcatel Alsthom Compagnie Generale d'Electricité, 75088 Paris (FR)
(72) Erfinder: Mönch, Egon, 75196 Remchingen (DE)
(74) Vertreter: Knecht, Ulrich Karl, Dipl.-Ing.

(57) **Zusammenfassung**

Bekannt ist ein Verfahren zum Aufbau einer Funkkette zwischen einer rufenden und einer gerufenen Funkstation innerhalb eines Funknetztes mit ersten Schritten (110 bis 140), bei denen für die rufende Funkstation (2) eine Liste (L) erstellt wird mit Angaben (S=2, R=4; 6) über Funkverbindungen zu benachbarten Funkstationen (4, 6).

Es wird ein verbessertes Verfahren (100) vorgestellt mit weiteren Schritten (151 bis 160), bei denen die Liste (L, L', L") schrittweise um Angaben (S=6, R=7; 8; 9) über Funkverbindungen zu denjenigen Funkstationen (7; 8; 9), die zu den benachbarten Funkstationen (6) wiederum benachbart sind, solange erweitert wird, bis in die Liste (L") Angaben (S=8; R=1) zu einer solchen Funkverbindung eingetragen werden, die zu der gerufenen Funkstation (1) führt. Die Liste (L") enthält keine überflüssigen Angaben, sondern nur solche, die für den Aufbau der kürzesten Funkkette benötigt werden. Es werden auch eine entsprechend verbesserte Funkstation und ein Funknetz vorgestellt, welches ein Gleichkanalsystem sein kann. Die Erfindung ist einsetzbar im Bereich der drahtlosen Bürokommunikation.

## Beschreibung

Die Erfindung betrifft ein Verfahren zum Aufbau einer Funkkette nach dem Oberbegriff des Anspruch 1. Außerdem betrifft die Erfindung ein Funknetz und eine Funkstation, in dem bzw. durch die das Verfahren durchgeführt wird, nach einem der neben geordneten Ansprüche.

Aus DE 39 08 940 A1 ist ein Verfahren zum Aufbau einer Funkkette innerhalb eines Funknetzes bekannt. Das dortige Funknetz enthält mehrere Funkstationen, von denen jede zumindest eine benachbarte Funkstation hat, mit der sie in direkter Funkverbindung steht. Mehrere Kanalpaare stehen für Duplex-Funkübertragungen zwischen den Funkstationen zur Verfügung. Vor Aufbau einer Funkkette mit mindestens zwei Funkverbindungen, werden durch die rufende Funkstation der Belegungszustand aller Kanäle geprüft und eine sogenannte Kanalbelegungsliste erstellt. Diese Liste enthält Angaben über Funkverbindungen zu den benachbarten Funkstationen, nämlich die Nummern der freien Kanäle, auf denen Funkverbindungen zu den benachbarten Funkstationen aufgebaut werden können. Um eine Funkkette zu einer gerufenen Funkstation aufzubauen, erhält die rufende Funkstation zusätzlich zu ihrer Kanalbelegungsliste auch die Kanalbelegungslisten der benachbarten Funkstationen, die innerhalb der Funkkette als Relaisstationen dienen. Bei dem bekannten Funknetz muß jedoch die rufende Funkstation alle Kanalbelegungslisten auswerten, um eine Funkkette aufbauen zu können. Die Auswertung der Listen ist in DE 39 08 940 A1 nicht beschrieben. Außerdem muß jede Funkstation einen Empfänger zum Abtasten der Kanäle haben (scanning receiver), um feststellen zu können, welche Kanäle frei sind für den Aufbau der Funkkette. Das bekannte Verfahren kann nur in einem Funknetz mit mehreren Kanälen durchgeführt werden.

Aufgabe der Erfindung ist es, ein Verfahren zum Aufbau einer Funkkette vorzustellen, das von einfach aufgebauten Funkstationen durchgeführt werden kann. Außerdem soll eine für die Durchführung des Verfahrens geeignete Funkstation und ein damit ausgestattetes Funknetz vorgestellt werden.

Gelöst wird die Aufgabe durch ein Verfahren mit den Merkmalen des Anspruch 1 sowie durch eine Funkstation und ein Funknetz mit den Merkmalen nach einem der neben geordneten Ansprüche.

Demnach wird zum Aufbau einer aus mindestens zwei Funkverbindungen bestehenden Funkkette die für die rufende Funkstation erstellte Liste, die bereits Angaben über Funkverbindungen zu benachbarten Funkstationen enthält, schrittweise um Angaben über Funkverbindungen zu denjenigen Funkstationen, die zu den benachbarten Funkstationen wiederum benachbart sind, solange erweitert, bis in die Liste Angaben zu einer solchen Funkverbindung eingetragen werden, die zu der gerufenen Funkstation führt.

Dadurch wird erreicht, daß die rufende Funkstation nur auf eine Liste zugreifen muß, um über alle Angaben, die für den Aufbau der Funkkette benötigt werden, verfügen zu können. Die nach dem erfindungsgemäßen Verfahren erstellte Liste enthält keine überflüssigen Angaben über solche Funkverbindungen, die nicht Teil der Funkkette sein könnten. Das Verfahren arbeitet in allen Funkstationen gleich. Die erfindungsgemäße Funkstation benötigt keinen Abtast-Empfänger. Außerdem kann das Funksystem auch ein Gleichkanalsystem sein. Das erfindungsgemäße Verfahren kann sowohl in einem dezentralen wie auch in einem zentralen Funknetz durchgeführt werden.

Gemäß einem abhängigen Anspruch ist es besonders vorteilhaft, daß aus der erweiterten Liste eine gekürzte Liste gebildet wird, die nur Angaben für eine kurze Funkkette mit möglichst wenigen Funkverbindungen enthält.

Weitere vorteilhafte Ausgestaltungen der Erfindung sind den anderen abhängigen Ansprüchen zu entnehmen.

Im weiteren wird ein Ausführungsbeispiels anhand der folgenden schematischen Zeichnungen beschrieben:
- Fig. 1,: die ein Ablaufdiagramm für das Verfahren zeigt;
- Fig. 2a,: die die Struktur eines dezentralen Funknetzes zeigt;
- Fig. 2b,: die eine von einer rufenden zu einer gerufenen Funkstation aufgebaute Funkkette zeigt;
- Fig. 3a,: die die schrittweise Erweiterung einer Liste für die rufende Funkstation zeigt, und
- Fig. 3b,: die die Bildung einer gekürzten Liste zeigt;

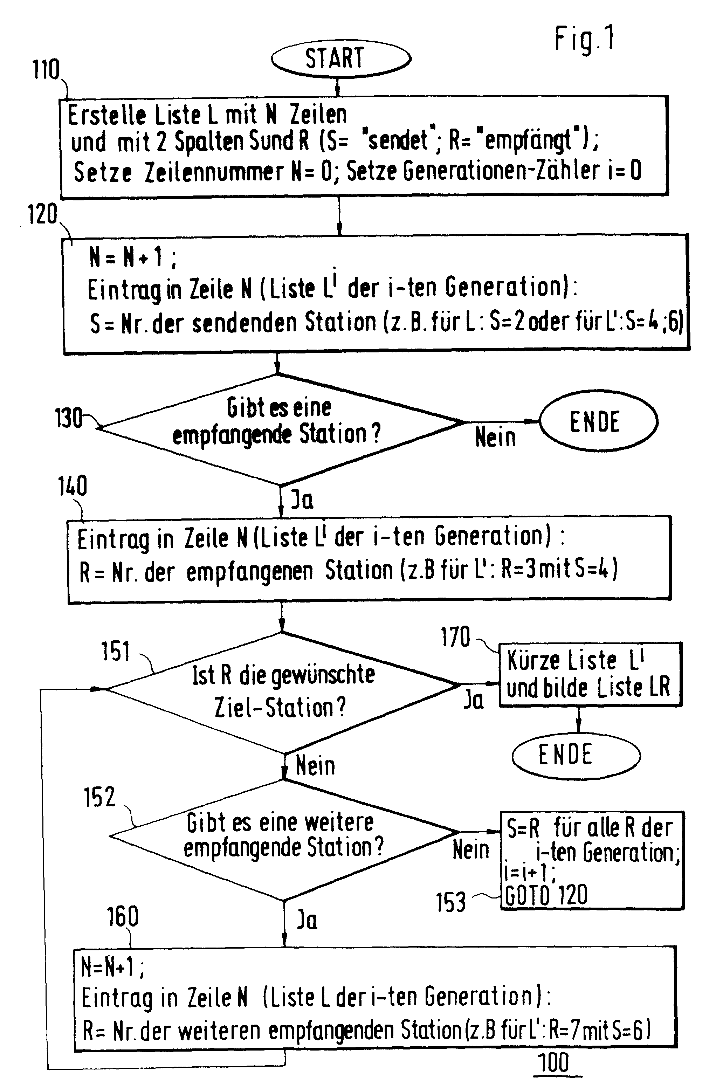

Die Figuren 1 bis 3 beziehen sich auf dasselbe Ausführungsbeispiel der Erfindung. Daher werden in den nachfolgenden beschriebenen Figuren dieselben Bezugszeichen verwendet.

In Fig. 1 ist schematisch das Ablaufdiagramm für ein Verfahren 100 zum Aufbau einer Funkkette dargestellt. Es wird davon ausgegangen, daß jede Funkstation in einem Speicher die Information über alle existierenden Funkverbindungen bereithält, so wie es etwa im eingangs genannten Stand der Technik beschrieben ist. In dem Verfahren wird eine Liste L für die rufende Funkstation erstellt, und anschließend zu einer Liste L" erweitert. Abschließend wird aus der erweiterten Liste L" eine gekürzte Liste LR gebildet.

Nach dem Start des Verfahrens 100 wird in einem ersten Schritt 110 eine Liste L erstellt, die N Zeilen (N ist eine natürliche Zahl) und zwei Spalten S und R hat. Die Zeilenzahl N ist nicht festgelegt, sondern jede Liste wird zeilenweise erweitert, indem Angaben über Funkverbindungen wie folgt zeilenweise eingetragen werden: In die Spalte S wird jeweils die Kennung der sendenden Funkstation und in die Spalte R wird jeweils die Kennung der empfangenden Funkstation eingetragen. Zu Beginn des Verfahrens wird die Zeilennummer N auf Null gesetzt. Ebenso wird ein Generationenzähler i auf Null gesetzt. Die Liste wird nur bis zu derjenigen Zeile N fortgeschrieben, die die Angaben über diejenige Funkverbindung enthält, die bei der gerufenen Funkstation endet. Dabei wird mit Hilfe des Generationzählers i so verfahren, daß zunächst für i=0 die direkten Funkverbindungen zu den benachbarten Funkstationen eingetragen werden und danach erst für i>0 die anderen Funkverbindungen berücksichtigt werden. Der Generationenzähler i gibt dabei an, welchen Rang eine jede Funkverbindung innerhalb der Funkkette einnimmt. Mit anderen Worten: Diejenigen Funkverbindungen, die unmittelbar von der rufenden Funkstation (hier S=2) ausgehen und bei den benachbarten Funkstationen (hier R=4 und R=6) enden sind der Eltern-Generation (i=0) zugeordnet. Diejenigen Funkverbindungen, die von diesen benachbarten Funkstationen (4 und 6) ausgehen und bei dazu benachbarten Funkstationen (3 bzw. 8, 7 und 9) enden, sind der ersten Generation (i=1) zugeordnet. Diejenigen Funkverbindungen, die wiederum von diesen benachbarten Funkstationen (3; 8, 7 und 9) ausgehen, sind der zweiten Generation (i=2) zugeordnet. Das gleiche gilt für die Funkverbindungen der nächsten Generationen (i=i+1). Demnach werden die Funkverbindungen entsprechend ihrer Rangfolge innerhalb der Funkkette den verschiedenen Generationen zugeordnet.

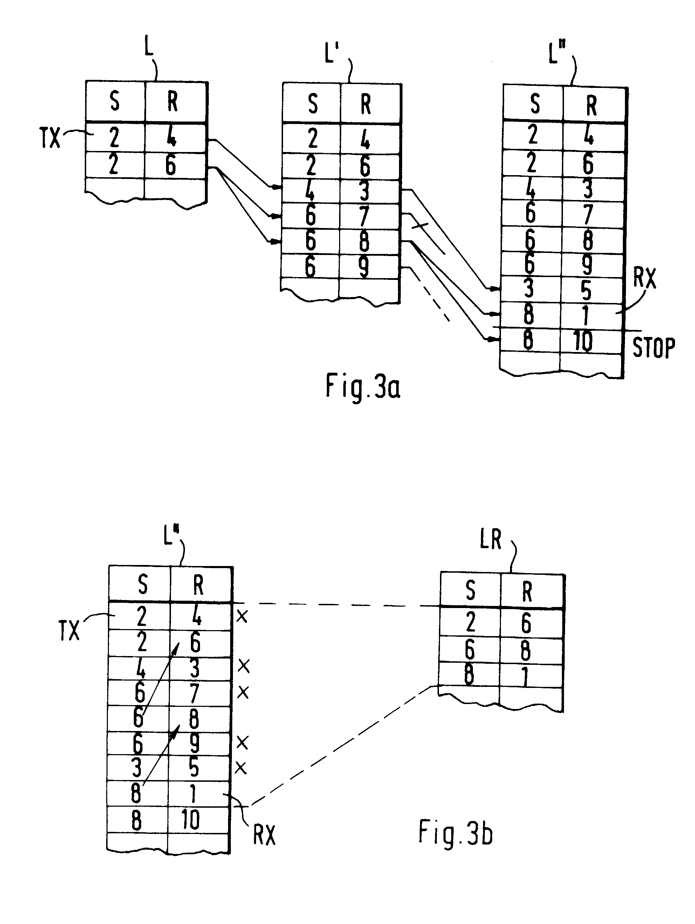

Die Liste L beginnt mit Einträgen zur Eltern-Generation (i=0): In einem Schritt 120 wird N um 1 erhöht (N= N+1). In die erste Zeile N=1 wird innerhalb der Spalte S die Kennung der sendenden Funkstation eingetragen (S=2, siehe auch Fig. 3a). In einem nächsten Schritt 130 wird geprüft, ob es eine Funkstation gibt, die von der sendenden Funkstation empfängt. Demnach wird geprüft, ob es eine Funkverbindung von der rufenden Funkstation (S=2) zu einer empfangenen Funkstation gibt. Ist dies nicht der Fall, so wird das Verfahren beendet. Ist dies jedoch der Fall, so wird in einem weiteren Schritt 140 der Eintrag in die Zeile N=1 vervollständigt. Dazu wird in die Spalte R die Kennung der empfangenen Funkstation (hier z.B. R=4, siehe auch Fig. 3a) eingetragen. Durch diese Angaben in einer jeden Zeile ist eindeutig angegeben welche Funkverbindungen innerhalb des Funknetzes bestehen. In diesem Beispiel für die Zeile N=1 besteht eine Funkverbindung von der sendenden Funkstation 2 zu der empfangenden Funkstation 4. Nachdem die Kennung der empfangenden Funkstation in die Zeile eingetragen wurde, wird in einem weiteren Schritt 151 geprüft, ob diese empfangende Funkstation die gerufene Funkstation (R=1) ist, die im weiteren auch Zielstation genannt wird.

Ist dies der Fall, so ist die Erweiterung der Liste abgeschlossen und es wird die Liste in einem Schritt 170 gekürzt. Durch die Kürzung der Liste wird eine noch später anhand der Fig. 3b beschriebene gekürzte Liste LR gebildet und anschließend das Verfahren beendet. Ist die Funkstation nicht die Zielstation (R≠1), so wird in einem weiteren Schritt 152 geprüft, ob es zu der sendenden Funkstation (S=2) noch eine weitere empfangende Funkstation innerhalb derselben Generation gibt (hier i=0 und R=6). Ist dies der Fall, so wird in einem weiteren Schritt 160 die Zeilennummer um 1 erhöht und in die Zeile N=N+1 die Kennung der weiteren empfangenden Funkstation eingetragen (R=6) anschließend wird der Schritt 151 wiederholt, d.h. es wird wiederholt geprüft, ob diese empfangende Funkstation die gewünschte Zielstation ist.

Ergibt die Prüfung in Schritt 152 nicht, daß es eine weitere empfangende Funkstation gibt, so wird in einem Schritt 153 die Liste L' um die nächste Generation (i=i+1) erweitert. Im Schritt 153 wird zudem geprüft, ob die empfangene Funkstation bereits in einer beliebigen Zeile der Liste innerhalb der Spalte R eingetragen worden ist. Ist dies der Fall, so erfolgt kein (wiederholter) Eintrag in die Liste. Wie zuvor schon erläutert hat der Generationenzähler i die Funktion, alle diejenigen Funkverbindungen mit demselben Rang zusammenfassend zu betrachten. Nachdem bereits für die Eltern-Gerneration (i=0) und für die erste Generation (i=1) die Funkverbindungen in die Liste L bzw. L' eingtragen wurden, werden nun für die zweite Generation (i=2) alle Funkverbindungen ermittelt und in die Liste L" eingetragen (hier S= 3 und 8 ; R= 5 bzw.1).

Die Liste wird wie oben beschrieben zeilenweise und fortlaufend von einer Generation zur nächsten erweitert, bis eine Funkverbindungen gefunden ist, die bei der gerufenen Funkstation (hier Funkstation 1) endet.

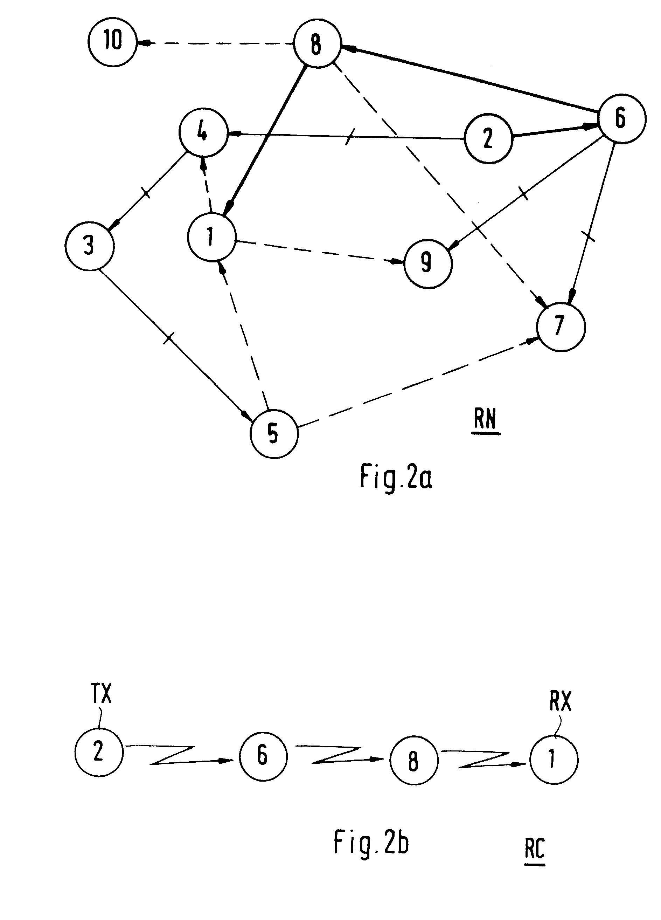

Der Aufbau einer Funkkette nach dem in Fig. 1 dargestellten Verfahren wird auch im folgenden auch anhand der Fig. 2 und 3 beschrieben:

In Fig. 2a ist ein Funknetz N dargestellt mit 10 Funkstationen 1 bis 10. Das Funknetz ist ein dezentrales Funknetz mit mobilen Funkstationen. In Fig. 2a ist schematisch eine Situation festgehalten, bei der folgende Funkverbindungen bestehen: Ausgehend von der Funkstation 2 bestehen Funkverbindungen zu der Funkstation 4 und zu der Funkstation 6. Diese Funkverbindungen gehören zur Eltern-Generation (i=0). Ausgehend wiederum von diesen benachbarten Funkstation 4 und 6 bestehen folgende Funkverbindungen, die zu der ersten-Generation (i=1) gehören: Von der Funkstation 6 zu den Funkstationen 7, 8 und 9 sowie von der Funkstation 4 zur Funkstation 3. Wiederum ausgehend von den empfangenden Funkstationen 3 sowie 7 und 8 bestehen folgende Funkverbindungen der zweiten-Generation (i=2): Von der Funkstation 3 zu der Funkstation 5, von der Funkstation 8 zu den Funkstationen 7 und 1. Die Funkstation 7 wird in der zweiten Generation (i=2) nicht mehr in die Liste eingetragen, da die Funkstation 7 bereits in der ersten Generation (i=1) eingetragen wurde. Die Funkverbindungen der dritten Generation (i=3) gehen von den Funkstationen 5, 7,1 und 10 aus und sind folgende: Von 5 nach 7, sowie von 1 nach 4, 5, und 9. Von den Funkstation 7 und 10 gehen keine Funkverbindungen aus.

Mit dem zuvor beschriebenen Verfahren ist es nun möglich eine Funkkette zu bilden, die von der rufenden Funkstation 2 ausgeht und bei der gerufenen Funkstation 1 endet. Eine mögliche Funkkette ist in Fig. 2b dargestellt und enthält folgende Funkverbindungen: Ausgehend von der rufenden Funkstation TX=2 zur Funkstation 6, danach zur Funkstation 8 und abschließend zur gerufenen Funkstation RX=1. Diese Funkkette RC ist nur eine von mehreren möglichen Funkketten. Eine andere Funkkette könnte aus folgenden Funkverbindungen aufgebaut werden: Von 2 nach 4, von 4 nach 3, von 3 nach 5 und von 5 nach 1.

Die in Fig. 2b dargestellte Funkkette RC ist jedoch die kürzeste aller möglichen Funkketten in dem Funknetz. Für die kürzeste Funkkette wurde nach dem Verfahren 100 aus Fig. 1 eine Liste LR aus der erweiterten Liste gebildet. Die Erweiterung und Kürzung der Liste ist auch in Fig. 3 näher dargestellt.

Zunächst zeigt Fig. 3a die Erweiterung der Liste für die rufende Funkstation TX=2. Ausgehend von der Liste L, in die die Funkverbindungen zu den benachbarten Funkstationen 4 und 6 eingetragen sind, wird die Liste zu einer Liste L' erweitert, indem die Funkverbindungen der ersten Generation eingetragen werden. Anschließend wird diese Liste L' wiederum erweitert durch Angaben von Funkverbindungen der zweiten Generation. Diese erweiterte Liste L" enthält bereits eine Funkverbindung die bei der gerufen Funkstation TX=1 endet, nämlich die Funkverbindung S=8 und R=1. Damit wird die Erweiterung der Liste L" an dieser Stelle abgebrochen.

Anschließend zeigt Fig. 3b, wie aus der erweiterten Liste L" die gekürzte Liste LR gebildet wird. Die erweiterte Liste L" enthält alle Angaben, die für den Aufbau eine Funkkette von der Funkstation 2 zur Funkstation 1 benötigt werden könnten. Aus der Liste L" werden nun alle Zeilen mit denjenigen Angaben gestrichen, die nicht für Aufbau der kürzesten Funkkette benötigt werden.

Dazu wird ausgehend von der Zielstation R=1; d.h. ausgehend von der rechten Spalte R in der letzten Zeile der Liste L", die in der ersten Spalte eingetragenen sendende Funkstation S=8 erfragt. Dann wird in den vorangestellten Zeilen innerhalb der zweiten Spalte R diese Funkstation 8 gesucht. In diesem Beispiel nach Fig. 3b ist dieser Eintrag R=8 in der fünften Zeile zu finden. Dann wird der zugeordnete Eintrag in der ersten Spalte erfragt, hier: S=6. Damit sind bereits die letzten beiden Glieder (Funkverbindungen) der Funkkette gefunden, nämlich die Funverbindung von 6 nach 8 und die Funkverbindung von 8 nach 1. Es wird nun in den vorangehenden Zeilen nach dem Eintrag R=6 gesucht. Dieser Eintrag steht in der zweiten Zeile zusammen mit dem Eintrag S=2. Demnach ist ein weiteres Glied (S=2 und R=6) der Funkkette gefunden, das in diesem Beispiel auch das erste und noch fehlende Glied ist, das zusammen mit den beiden anderen Gliedern (S=6, R=8; S=8, R=1) die Funkkette bildet.

Es werden dann diejenigen Zeilen (hier Zeilen N=2,5 und 8), die die Angaben für die Funkkette enthalten, zu einer gekürzten Liste LR zusammengefaßt.

Das beschriebene Verfahren ist besonders geeignet, um möglichst kurze Funkverbindungen in einem dezentralen Funknetz, z.B. in einem drahtlosen Bürokommunikationsnetz aufzubauen. Das Verfahren arbeitet in jeder Funkstation gleich. Das Funknetz kann auch ein Gleichwellenfunknetz sein, in dem der Zugriff auf die Funkresourcen mittels TDMA oder CDMA erfolgt.

## Patentansprüche

1. Verfahren (100) zum Aufbau einer aus mindestens zwei Funkverbindungen bestehenden Funkkette (RC) zwischen einer rufenden Funkstation (2) und einer gerufenen Funkstation (1) innerhalb eines Funknetztes (RN), mit ersten Schritten (110 bis 140), bei denen für die rufende Funkstation (2) eine Liste (L) erstellt wird mit Angaben (S=2, R=4; 6) über Funkverbindungen zu benachbarten Funkstationen (4, 6),
gekennzeichnet, durch
weitere Schritte (151 bis 160), bei denen die Liste (L, L', L") schrittweise um Angaben (S=6, R=7; 8; 9) über Funkverbindungen zu denjenigen Funkstationen (7; 8; 9), die zu den benachbarten Funkstationen (6) wiederum benachbart sind, solange erweitert wird, bis in die Liste (L") Angaben (S=8; R=1) zu einer solchen Funkverbindung eingetragen werden, die zu der gerufenen Funkstation (1) führt.

2. Verfahren (100) nach Anspruch 1,
dadurch gekennzeichnet, daß in einem nachfolgenden Schritt (170) aus der erweiterten Liste (L") eine gekürzte Liste (LR) gebildet wird, indem die erweiterte Liste (L") bis auf diejenigen Angaben (S=2 , R=6 ; S=6 , R=8 ; S=8 , R=1) gekürzt wird, die die kürzeste Funkkette (RC) von der rufenden Funkstation (2) zu der gerufenen Funkstation (1) angeben.

3. Verfahren (100) nach Anspruch 1,
dadurch gekennzeichnet, daß die Liste (L) eine erste Spalte (S) und eine zweite Spalte (R) enthält und daß die Angaben über die Funkverbindungen zeilenweise in die Liste (L) eingetragen werden, wobei für jede Funkverbindung in die erste Spalte (S) Angaben zur sendenden Funkstation (S=2) und in die zweite Spalte (R) Angaben zur empfangenden Funkstation (R=3) eingetragen werden.

4. Verfahren (100) nach Anspruch 1 oder 3,
dadurch gekennzeichnet, daß die Angaben Kennungen enthalten, die den Funkstationen (1 bis 10) zugeordnet werden.

5. Funknetz (RN) mit mehreren Funkstationen (1 bis 10), bei dem eine rufende Funkstation (2) zum Aufbau einer aus mindestens zwei Funkverbindungen bestehenden Funkkette (RC) zu einer gerufenen Funkstation (3) auf einen Speicher zugreift, der für die rufende Funkstation (2) eine Liste (L) enthält mit Angaben (S=2, R=4; 6) über Funkverbindungen zu benachbarten Funkstationen (4, 6),
dadurch gekennzeichnet, daß
der Speicher auch über Funkverbindungen zu denjenigen Funkstationen (7; 8; 9), die zu den benachbarten Funkstationen (6) wiederum benachbart sind, Angaben (S=6, R=7; 8; 9) enthält, um welche die Liste (L, L', L") schrittweise erweitert ist bis einschließlich den Angaben (S=8; R=1) über eine solche Funkverbindung, die zu der gerufenen Funkstation (1) führt.

6. Funknetz (RN) nach Anspruch 5,
dadurch gekennzeichnet, daß das Funknetz ein dezentrales Funknetz (RN) ist und daß die Funkstationenen (1 bis 10) untereinander die in den Listen abgelegten Angaben austauschen.

7. Funkstation (2) für ein Funknetz (RN) mit mehreren Funkstationen (1 bis 10), die eine rufende Funkstation (2) ist und die zum Aufbau einer aus mindestens zwei Funkverbindungen bestehenden Funkkette (RC) zu einer gerufenen Funkstation (1) auf einen Speicher zugreift, der für die rufende Funkstation (2) eine Liste (L) enthält mit Angaben (S=2, R=4; 6) über Funkverbindungen zu benachbarten Funkstationen (4, 6),
**dadurch gekennzeichnet, daß**
der Speicher auch über Funkverbindungen zu denjenigen Funkstationen (7; 8; 9), die zu den benachbarten Funkstationen (6) wiederum benachbart sind, Angaben (S=6, R=7; 8; 9) enthält, um welche die Liste (L, L', L") schrittweise erweitert ist bis einschließlich den Angaben (S=8; R=1) über eine solche Funkverbindung, die zu der gerufenen Funkstation (1) führt.
